(19) Europäisches Patentamt
European Patent Office
Office européen des brevets

(11) **EP 2 242 019 B1**

(12) **EUROPEAN PATENT SPECIFICATION**

(45) Date of publication and mention
of the grant of the patent:
**13.01.2016 Bulletin 2016/02**

(51) Int Cl.:
***G06T 5/20*** *(2006.01)*    ***H04N 5/217*** *(2006.01)*

(21) Application number: **09157941.7**

(22) Date of filing: **15.04.2009**

(54) **Image region interpolation**

Bildbereichsinterpolation

Interpolation de la région d'une image

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**20.10.2010 Bulletin 2010/42**

(73) Proprietors:
• **Mitsubishi Electric R&D Centre Europe B.V.
The Surrey Research Park
Guildford, Surrey GU2 7YD (GB)**
• **Mitsubishi Electric Corporation
Chiyoda-ku
Tokyo 100-8310 (JP)**

(72) Inventor: **Sibiryakov, Alexander
Guildford
Surrey GU2 7YD (GB)**

(74) Representative: **Hoffmann Eitle
Patent- und Rechtsanwälte PartmbB
Arabellastraße 30
81925 München (DE)**

(56) References cited:
**EP-A- 1 517 536        EP-A- 1 672 907
EP-A- 1 720 337        US-A- 5 430 811
US-A1- 2003 043 286        US-B1- 6 642 960**

**Description**

**Field of the Invention**

The present invention relates to image processing for processing image data with a flaw or artefact to generate corrected image data.

The invention is particularly, but not exclusively, useful for processing image data from a scanner for scanning documents such as pages of printed text, graphics, images etc. The scanner may comprise part of a digital copying machine, a facsimile machine, or the like, or it may comprise a stand-alone system, such as a flat-bad scanner or a hand-held scanner etc., for connection to a personal computer etc. Accordingly, the image processing may be performed within the scanner itself, within the apparatus containing the scanner or within an apparatus which receives scanned image data from the scanner.

**Background of the Invention**

Many conventional document scanners, and in particular flatbed scanners, employ a contact image sensor (CIS) to generate the scanned image data.

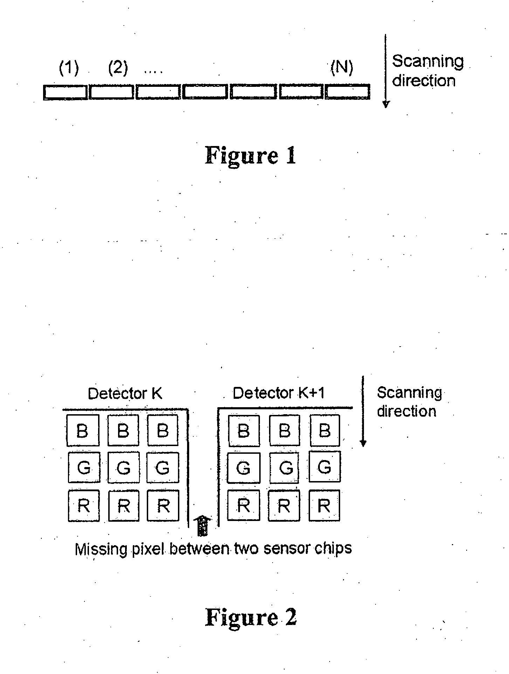

The CIS comprises a light source (usually made up of LEDs) to illuminate the document being scanned, a sensor for detecting light reflected from the document and a lens system for focusing the reflected light onto the sensor. The CIS imaging system typically consists of a linear array of detectors (1), (2), ..., (N), schematically shown in Fig. 1.

One problem of such a linear arrangement of image detectors is missing pixels in the scanned document. Such pixels cannot be captured between the image detectors due to their imprecise placement. This problem is illustrated in Fig. 2. It shows the gap between two neighbour image detectors K and K+1, and in case of vertical scanning direction, this gap will result in missing pixel columns in the scanned document.

The possible solutions to the missing pixel problem can be divided into three categories:

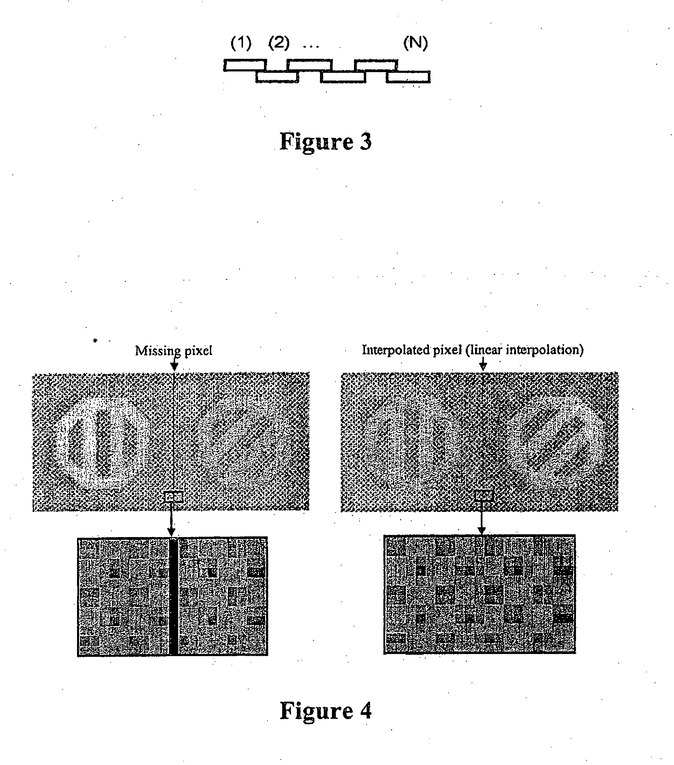

1. Design of the new layout of the detectors. To remove the gaps between the detectors, the detectors can be arranged in "staggered row" as shown in Fig. 3. In this case the problem of missing pixels does not exist, but another problem appears: image stitching between the detectors. Also, this solution requires full redesign of the existing CIS product and introduction of a different model to the market.

2. High-precision placement of the detectors. In this solution, the gap between detectors is removed by minimising the distance between the RGB-sensors of the neighbouring detectors (Fig. 2). However, this is a high-cost solution requiring expensive equipment and a change in the production technology.

3. Pixel interpolation by image processing methods that take the required missing pixel values from the image neighbourhood. This is a relatively low-cost approach, because it can be implemented by updating the image processing hardware, and, therefore, existing CIS products can be updated without redesign or changing the production technology.

The main problem with the standard image interpolation methods is that they cannot reconstruct accurately the pixel values in textured areas, because the local pixel neighbourhood does not contain the required information. Fig. 4 shows an example of this problem: a fragment of a scanned image with one missing column is on the left; the result of linear interpolation is on the right. The interpolation errors in the resulting image are very well visible to the user.

**Summary of the Invention**

According to the present invention, there is provided a method of processing image data defining an image to calculate pixel values for a plurality of pixels within the image, the method comprising:

defining, for each pixel for which a value is to be calculated, a plurality of template patterns of pixels such that each template pattern comprises a different region of the image and contains the pixel for which a value is to be calculated;

for each template pattern:

- defining a search area comprising the whole of the image or a region of the image that is larger than the template pattern;

- comparing the values of the pixels in the template pattern with the values of the pixels in each of a plurality of candidate patterns, each candidate pattern comprising a different region from the search area for the template pattern, so as to derive a similarity measure for each candidate pattern representing the similarity between the template pattern and the candidate pattern;

- selecting from the plurality of candidate patterns the candidate pattern having the similarity measure representing the highest similarity with the template pattern; and

- determining for each pixel within the template pattern for which a value is to be calculated a respective pixel value from the selected candidate pattern;

thereby generating for each pixel in the image for which a value is to be calculated, a plurality of values such that each value is derived from a different candidate pattern; and

for each pixel for which a value is to be calculated, combining the derived pixel values therefor.

The present invention also provides an image processing apparatus operable to process image data defining an image to calculate pixel values for a plurality of pixels within the image, the apparatus comprising:

a template pattern selector operable to define a plurality of overlapping template patterns of pixels for each pixel for which a value in the image is to be calculated, such that each template pattern comprises a region of the image and contains the pixel for which a value is to be calculated;

a search area selector operable to define a search area for each template pattern comprising the whole of the image or a region of the image that is larger than the template pattern;

a pattern matcher operable to perform processing for each template pattern to compare the values of the pixels in the template pattern with the values of the pixels in each of a plurality of candidate patterns, each candidate pattern comprising a region from the search area for the template pattern, operable to select from the plurality of candidate patterns the candidate pattern which represents a best match with the template pattern, and operable to determine for each pixel within the template pattern for which a value is to be calculated a respective pixel value from the selected candidate pattern, so as to generate, for each pixel in the image for which a value is to be calculated, a plurality of values such that each value is derived from a different candidate pattern; and

a pixel combiner operable to combine, for each pixel for which a value is to be calculated, the derived pixel values therefor.

The present invention further provides a computer program product, such as a computer-readable storage medium or a computer-readable signal, carrying computer program instructions for programming a programmable processing apparatus to become operable to perform a method as set out above.

**Brief Description of the Drawings**

Embodiments of the present invention will now be described, by way of example only, with reference to the accompanying drawings, in which:

Figure 1 schematically shows an image detector layout in a conventional CIS;

Figure 2 illustrates the missing pixel problem of conventional detectors;

Figure 3 shows an alternative layout of CIS detectors to address the missing pixel problem;

Figure 4 illustrates a problem with linear interpolation of missing pixels in a textured area;

Figure 5 illustrates a best-matching pattern technique employed in embodiments of the present invention;

Figure 6 illustrates pixel interpolation by averaging of pixels from best-matching patterns in embodiments of the invention;

Figure 7 illustrates the result of processing performed by an embodiment on the image of Fig. 4;

Figure 8 illustrates the result of processing performed by an embodiment on an image comprising text;

Figure 9 schematically shows the component of a first embodiment of the present invention;

Figure 10 shows a flow chart of the processing operations performed by the first embodiment;

Figure 11 shows an example layout of the pixel to be interpolated, template pattern and search area centred on the pixel to be interpolated in an embodiment;

Figure 12 illustrates the processing performed in the first embodiment to accumulate pixels from best-matching patterns;

Figure 13 illustrates the delay between input and output image lines in case of an embodiment employing a "Line In - Line Out" implementation;

Figure 14 shows a flow chart of an iterative implementation of the proposed method in an embodiment;

Figure 15 shows a flow chart of processing to make a decision between results of iteration 0 and iteration 1 in an embodiment;

Figure 16 illustrates a best-matching pattern technique employed in a modification to deal with regions of arbitrary shape; and

Figure 17 illustrates pixel interpolation by averaging of pixels from best-matching patterns in a modification to deal with regions of arbitrary shape

## Embodiments of the Invention

Before describing embodiments of the invention, the theory of operation underlying the embodiments, and examples of results, will be described in order to assist understanding.

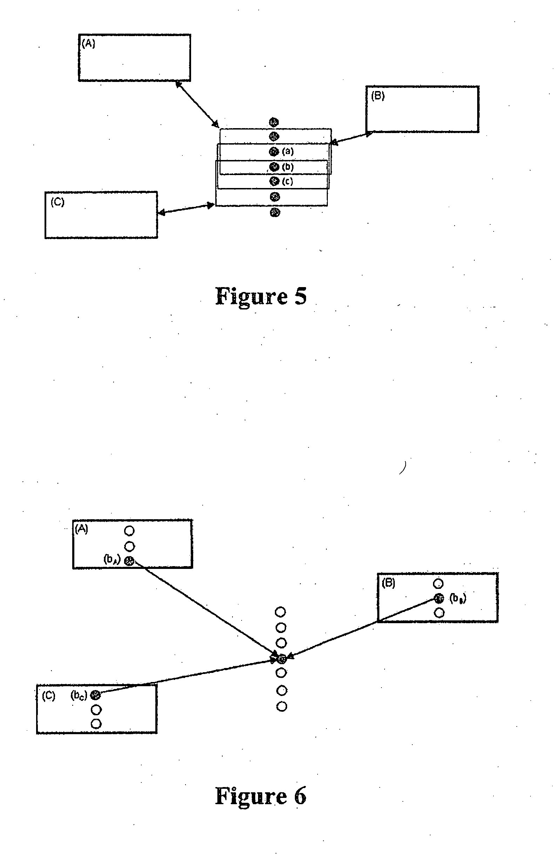

The embodiments employ a pixel interpolation method based on non-local averaging of pixels from similar patterns. More particularly, for each pixel that needs interpolation, a small 2D-pattern around it (a template pattern) is matched to all other such 2D-patterns in some (preferably large) search area, as illustrated in Fig. 5.

Referring to Fig. 5, pixels (a),(b) and (c) are three pixels from the image column that needs interpolation. The rectangles around each pixel (filled circles) of the interpolated region show the patterns that are matched to all other patterns from the search area. Rectangles (A), (B) and (C) show the location of best-matching patterns for the pixels (a), (b) and (c).

The pixels from the best-matching patterns are accumulated in an internal buffer and the output pixels are obtained by weighted averaging of the accumulated pixels, as illustrated in Fig. 6.

Referring to Fig. 6, each best-matching pattern, (A), (B) and (C) contains its own version (candidate) of pixel b (filled circle), denoted by $(b_A)$, $(b_B)$ and $(b_C)$ respectively. The resulting value is obtained by averaging of all candidate pixels in accordance with the equation:

$$b = \frac{w_A b_A + w_B b_B + w_C b_C}{w_A + w_B + w_C} \tag{1}$$

where b is the interpolated pixel value, $b_A$ is the value of the candidate pixel from pattern $A$, $b_B$ is the value of the candidate pixel from pattern $B$, $b_C$ is the value of the candidate pixel from pattern $C$, and $w_A$, $w_B$ and $w_C$ are weight values.

The pattern matching may be implemented in a number of different ways but, in one embodiment, is implemented very efficiently using an integral distance technique.

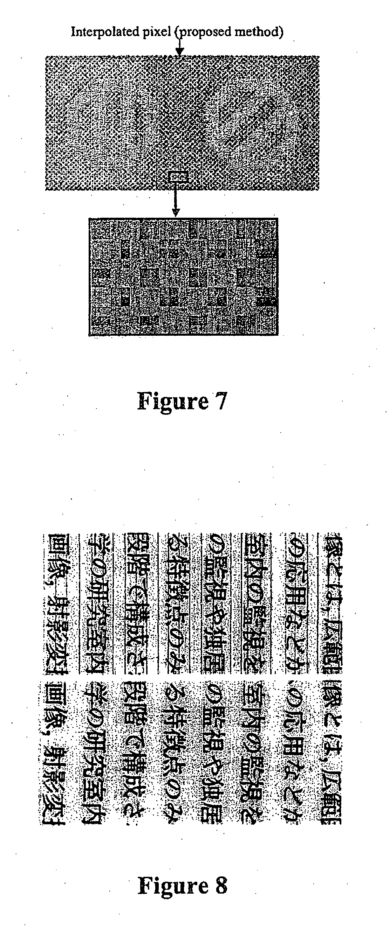

The proposed method overcomes the drawbacks of the local interpolation methods by using a large search area. The unknown pixel values are not synthesised from the local neighbourhood, but rather taken directly from many similar patterns. This approach reconstructs the image precisely in the textured areas, as illustrated in Fig. 7, which shows an example of application of the proposed method to the image from Fig. 4. Furthermore, the approach does not corrupt regular structures, such as text, for example as illustrated in Fig. 8, in which the top image comprises a scanned image of text with artificially embedded noisy lines, and the bottom image shows interpolation of noisy lines with the proposed method.

First Embodiment

First the simplest embodiment of the invention is described. For ease of illustration processing will be described to interpolate a single one-pixel column in the image. However, it will be appreciated that the pixel column (or columns) can have any width. Furthermore, the interpolated region can be more complex than just a vertical column of pixels. For example, the region can have variable width and curvilinear shape. The description of the embodiment below is still valid for all these alternatives, and more details about application to complex regions are presented later in the description.

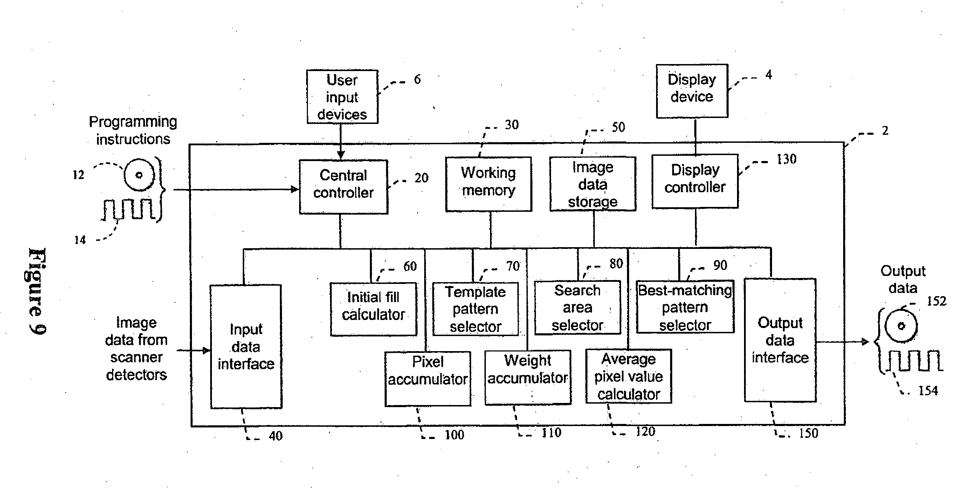

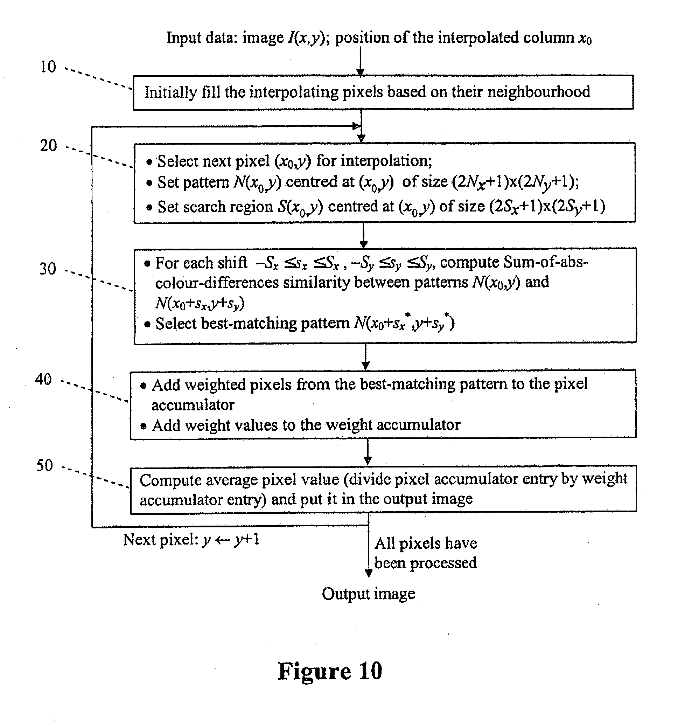

Fig. 9 shows a block-diagram of the components of the first embodiment and Fig. 10 shows a flow chart of the processing operations performed by the first embodiment.

Referring to Fig. 9, a processing component 2 of a scanner is shown. In this embodiment, the processing component 2 is programmable and comprises, in a conventional manner, one or more processors, memories, graphics cards, etc., together with a display device 4 and one or more user input devices 6, such as a keyboard, etc.

The processing component 2 is programmed to operate in accordance with programming instructions input, for example, as data stored on a data storage medium 12 (such as an optical CD ROM, semiconductor ROM, magnetic recording medium, etc.), and/or as a signal 14 (for example an electrical or optical signal) input to the processing apparatus 2, for example from a remote database, by transmission over a communication network (not shown) such as the internet or by transmission through the atmosphere.

When programmed by the programming instructions, processing component 2 can be thought of as being configured as a number of functional units for performing processing operations. Examples of such functional units and their interconnections are shown in Fig. 9.

Referring to the functional units shown in Fig. 9, central controller 20 is operable to process inputs from the user input device(s), and also to provide control and processing for the other functional units. Working memory 30 is provided for use by central controller 20 and the other functional units.

Input data interface 40 is operable to control the storage of input data within processing apparatus 2. In this embodiment, the input data comprises image data recorded by the detectors (not shown) of the scanner.

Image data store 50 is provided to store the image input data.

Initial fill calculator 60 is operable to calculate initial values for the pixels that are missing due to the gap(s) in the scanner's detectors.

Template pattern selector 70 is operable to select a template pattern around each pixel for which an interpolated value is to be calculated.

Search area selector 80 is operable to select a search area around a pixel for which an interpolated value is to be calculated, thereby defining an area in which the search for patterns matching the pattern in the template pattern is to be performed.

Best-matching pattern selector 90 is operable to perform pattern matching to match the pattern within a pattern template with patterns in different regions of the search area, and is further operable to perform processing to select a best-matching pattern therefrom.

Pixel accumulator 100 and weight accumulator 110 comprise respective memory buffers. Pixel accumulator 100 is arranged to accumulate pixel values identified by best-matching pattern selector 90. Weight accumulator 110 is arranged to accumulate weight values for the pixels identified by best-matching pattern selector 90.

Average pixel value calculator 120 is operable to process the values accumulated in pixel accumulator 100 and weight accumulator 110 to calculate an interpolated pixel value for the pixel currently being processed.

Display controller 130, under the control of central controller 20, is operable to control display device 4 to display the input image data stored in image data store 50 together with the interpolated pixel values calculated by average pixel calculator 120, thereby displaying corrected image data.

Output data interface 150 is operable to control the output of data from processing component 2. In this embodiment, the output data comprises the corrected image data, namely the image data received from the scanner detectors stored in image data store 50, together with the interpolated pixel values that have been calculated to fill the gaps resulting from the gaps in the scanner detectors. Output data interface 150 is operable to output the data for example as data on a computer-readable storage medium 152 (such as an optical CD ROM, semiconductor ROM, magnetic recording medium, etc.) and/or as a signal 154 (for example an electrical or optical signal transmitted over a communication network such as the Internet or through the atmosphere). A recording of the output data may be made by recording the output signal 154 either directly or indirectly.

Referring now to Fig. 10 in block 10, initial fill calculator 60 initializes unknown pixel values - that is, initial fill calculator 60 provides an initial value for each pixel in the image that corresponds to a gap in the scanner's detectors (and therefore does not have a value recorded by a detector). In this embodiment, each initial value is calculated by any prior art pixel interpolation method. For example, a linear combination of n pixels from the left and n pixels from the right can be used, as given by equation (2), where $k_i$ are the coefficients of the linear interpolation and C is one of the colour channels, R, G or B:

$$C[x_0, y] = \frac{\sum_{i=1}^{n} k_i (C[x_0 - i, y] + C[x_0 + i, y])}{2 \sum_{i=1}^{n} k_i} \qquad (2)$$

In the simplest case, the average of two neighbour pixels is computed ($k_1$=1 and $k_i$=0, $i$>1)

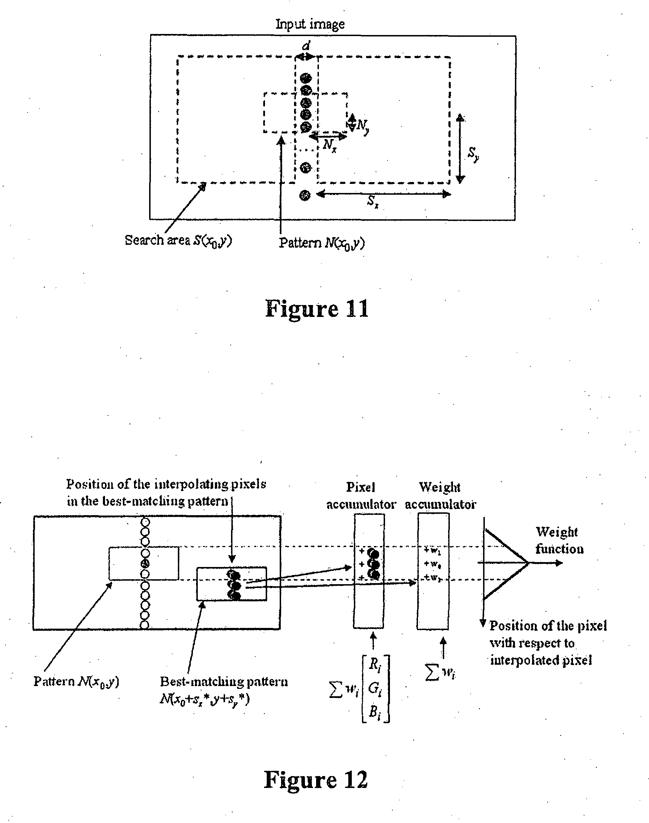

In block 20, central controller 20 selects the next pixel ($x_0$,$y$) to be processed, template selector 70 selects the template pattern $N$ for the pixel and search area selector 80 selects a search area S for the pixel. In this embodiment, both the template pattern N and search area S are centred at the pixel ($x_0$,$y$). An example selection is shown in Fig. 11. The interpolating region divides the search area in two parts - for example left and right when there is a vertical line of pixels to be interpolated, and the algorithm does not consider pattern centred in the pixels of the interpolating region. Optionally, a parameter $d$ (as shown in Fig. 11) can determine the minimal distance between the left and right parts of the search area. This parameter ensures that the best-matching pattern cannot be selected in the vicinity of the interpolating region (where the distance between the patterns is less reliable due to unknown pixel values).

In block 30, best-matching pattern selector 90 performs pattern matching and best-matching pattern selection. This processing can be performed in a number of different ways. For example, in this embodiment, the distance between the template $N(x_0,y)$ and any other pattern $N(x_0+s_x,y+s_y)$ from the search area is computed as a weighted sum of absolute colour differences (SACD):

$$SACD[x_0, y, s_x, s_y] = \sum_{i=y-N_y}^{y+N_y} \sum_{j=x_0-N_x}^{x_0+N_x} w_R |R[i, j] - R[i + s_y, j + s_x]| +$$
$$w_G |G[i, j] - G[i + s_y, j + s_x]| + \qquad (3)$$
$$w_B |B[i, j] - B[i + s_y, j + s_x]|$$

In equation (3), parameters $w_R$, $w_G$ and $w_B$ determine weights of each colour channel. In the simplest implementation, all weights can be set to 1. Also, any other standard distance or similarity measure (sum of squared differences or correlation) can be used in pattern matching. Note that, in this embodiment, the distance is computed by equation (3) using all pixels of the template including unknown pixels that have been replaced by linear interpolation in block 10.

The position of the best-matching pattern $N^*(x_0,y)$-$N(x_0+s_x{}^*,y+s_y{}^*)$ is determined by the minimal value of the distance measure:

$$SACD_{min}[x_0, y] = SACD[x_0, y, s_x^*, s_y^*] \qquad (4.1)$$

$$(s_x^*, s_y^*) = \underset{(x_0+s_x, y+s_y) \in S(x_0, y)}{\arg\min} SACD[x_0, y, s_x, s_y] \qquad (4.2)$$

Block 40 further processes the best-matching pattern that had been found in block 30. The details of this processing are shown in Fig. 12. The undefined pixels in the middle of the template pattern N correspond to the well-defined pixels in the pattern $N^*$, this follows from the fact that the search is not performed in the vicinity of the interpolating region (as regulated by the parameter d, shown in Fig. 11). Therefore pixels from $N^*$ are possible candidates for unknown pixels. Due to overlap of template patterns (as shown in Fig. 5), each unknown pixel has several candidates from the corresponding best-matching patterns (as shown in Fig. 6). In the present embodiment, the candidates are averaged in block 50 by average pixel value calculator 120 to obtain an estimated value of the unknown pixel.

To perform pixel averaging efficiently, two memory buffers are allocated and initialized by zero before the start of the algorithm - pixel accumulator $P$ 100 and weight accumulator $W$ 110. These accumulators 100, 110 have the same topology as the interpolating region. For example, if the region is an image column, the accumulators are one-dimensional arrays; if the region consists of a few columns, the accumulators are two-dimensional arrays. If the region has an arbitrary shape, the accumulators can be implemented as two-dimensional arrays masked by the region's shape.

The pixel accumulation process is shown in Fig. 12. If the template pattern N contains m unknown pixels with coordinates $(x_i, y_i)$, $i=1,...,m$ then in the best-matching pattern $N^*$ their coordinates are $(x_i+s_x^*, y_i+s_y^*)$. Note that the current pixel $(x_0, y)$ is among these m pixels. The accumulators 100, 110 are updated as follows:

$$P_C[x_i - a, y_i - b] \leftarrow P_C[x_i - a, y_i - b] + w(x_i - x_0, y_i - y) \, C[x_i + s_x^*, y_i + s_y^*] \qquad (5.1)$$

$$W[x_i - a, y_i - b] \leftarrow W[x_i - a, y_i - b] + w(x_i - x_0, y_i - y) \qquad (5.2)$$

In these expressions, C denotes one of the colour channels of the original image, R, G or B. The constants a and b determine the origin of the accumulator arrays with respect to the image. In the simplest case when the interpolating region is the entire pixel column at $x_0$, $a=x_0$ and $b=0$.

The weight function w in equations (5.1) and (5.2) can have any form, e.g. it can be a constant. But intuitively it is clear that the best-matching pattern $N^*(x_0, y)$ should contribute to interpolation of pixel $(x_0, y)$ more than other best-matching patterns, e.g. $N^*(x_0, y \pm 1)$. Therefore, in the present embodiment, w is symmetrical around the current pixel $(x_0, y)$ and decreasing at the pattern edges. For example, the weight function can decrease linearly, as shown in the graph on the right of Fig. 12 and given by equation (6):

$$w(x, y) = \left(1 - \frac{|x|}{N_x}\right)\left(1 - \frac{|y|}{N_y}\right) \qquad (6)$$

Finally, in block 50, average pixel value calculator 120 produces the result of interpolation by dividing the pixel accumulator value by the weight accumulator value, thus computing the weighted average:

$$C_{output}[x_0, y] = \frac{P[x_0 - a, y - b]}{W[x_0 - a, y - b]} \qquad (7)$$

After that the algorithm proceeds with the next pixel $(x_0, y+1)$ starting from block 20 until all pixels that need interpolation are processed.

Modifications and Variations

Many modifications and variations can be made to the embodiment described above, for example as described below.

Implementation "Image line In - Image line Out"

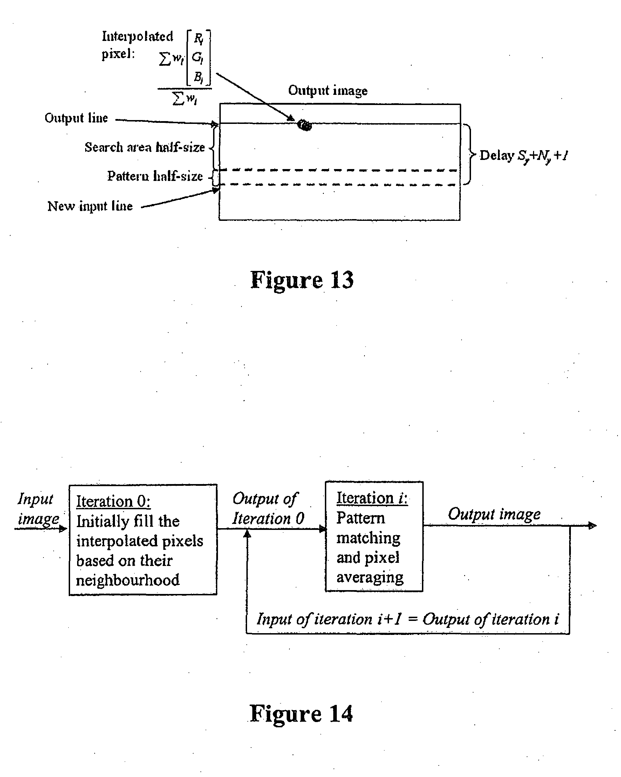

In order to interpolate one pixel, the processing algorithm in the embodiment above requires an image region of size $(2(N_x+S_x)+1) \times (2(N_y+S_y)+1)$ centred at that pixel, because the pattern matching process places the centre of the pattern at each pixel of the search area. Efficient memory consumption can be achieved by keeping only $2(N_y+S_y)+1$ image lines in a memory buffer. Initially, the first $2(N_y+S_y)+1$ image lines are placed into the buffer, and the information from the buffer is enough to process the image line with number $N_y+S_y+1$, corresponding to the central line of the buffer. Then, all buffer lines are shifted so that the first line is discarded, the second line becomes the first and so on. The new image line is placed in the last line of the buffer making it possible to produce the next output image line corresponding to the central buffer line. Thus, this implementation has delay between input and output image lines equal to $N_y+S_y+1$, as shown in Fig. 13.

Fast pattern matching using integral distance

Let function f be the inner sum in the distance equation (3):

$$SACD[x_0, y, s_x, s_y] = \sum_{i=y-N_y}^{y+N_y} f(i, x_0, s_x, s_y), \qquad (8)$$

where

$$f(i, x_0, s_x, s_y) = \sum_{j=x_0-N_x}^{x_0+N_x} w_R \left| R[i,j] - R[i+s_y, j+s_x] \right| +$$
$$w_G \left| G[i,j] - G[i+s_y, j+s_x] \right| + \qquad (9)$$
$$w_B \left| B[i,j] - B[i+s_y, j+s_x] \right|$$

The interpolating pixel position $x_0$ in (8) is a constant. If two other parameters, $s_x$ and $s_y$, are fixed, then function $f$ depends only on $i$, and equation (8) becomes

$$SACD[y] = \sum_{i=y-N_y}^{y+N_y} f(i), \qquad x_0, s_x, s_y = \text{const} \qquad (10)$$

Next, if an integral distance function (ISACD) is introduced:

$$ISACD[z] = \sum_{i=0}^{z} f(i) = ISACD[z-1] + f(z) \qquad (11)$$

then computation of distance requires only two values of ISACD, thus becoming much simpler:

$$SACD[y] = ISACD[y + N_y] - ISACD[y - N_y - 1] \qquad (12)$$

In order to show how to make search parameters constant, which is assumed in equations (10)-(12), in Table 1 the straightforward pattern matching implementation of the first embodiment is compared with the fast pattern matching implementation of the present modification using C/C++-like pseudocode. For the compact code, only the first part of pattern matching is implemented, namely the search of minimal distance (4.1). The other part, selection of the positions of the best-matching patterns (4.2) can be added directly after obtaining the *MinDistance* value.

Table 1: Two implementations of pattern matching

| Straightforward pattern matching | Fast pattern matching |
|---|---|
| ```for (y=0; y<ImageHeight; y++)<br>{<br>  MinDistance = ∞<br>  for (sx=-Sx; sx≤Sx; sx++)<br>  for (sy=-Sy; sy≤Sy; sy++)<br>    MinDistance=min( MinDistance,<br>                  SACD[x0,y,sx,sy])<br>}``` | ```for (y=0; y<ImageHeight; y++)<br>    MinDistance[y] = ∞<br>for (sx=-Sx; sx≤Sx; sx++)<br>for (sy=-Sy; sy≤Sy; sy++)<br>{<br>  for (y=0; y<ImageHeight; y++)<br>    ISACD[y] = ISACD[y-1] + f(y)<br>  for (y=0; y<ImageHeight; y++)<br>    MinDistance[y]=min(MinDistance[y],<br>              ISACD[y+Ny] - ISACD[y-Ny-1])<br>}``` |

The main difference between the slow and the fast algorithms is that the fast algorithm heavily re-uses intermediate results of pattern distance computation. This is implemented by a different order of the loops: in the slow algorithm, the search loop $(s_x, s_y)$ is inside the pixel position loop $(y)$; in the fast algorithm, the pixel position loop $(y)$ is inside the search loop $(s_x, s_y)$. As a result, the SACD value, which is also computed via the 2D-loop in the slow algorithm, is not computed directly in the fast algorithm, thus saving the computation time. The side effect of the fast implementation is that it requires more memory to store internal results (buffers ISACD[] and MinDistance[]of the image height size).

<u>Iterative Algorithm</u>

Another variant of the first embodiment is iterative application of the pattern matching process, in which the new result of interpolation is used as the initial approximation of the unknown pixels at the next iteration. In this case, the initial linear interpolation (block 10 in Fig. 10) can be considered as iteration 0. The block-diagram of the iterative algorithm is shown in Fig 14.

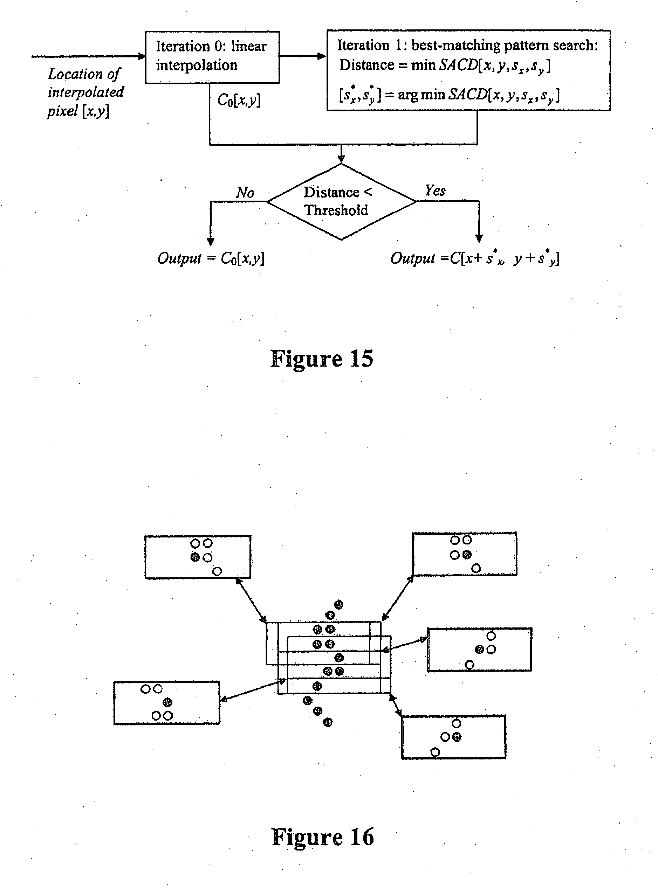

In many cases the input image has a simple structure (e.g. uniform areas) and good interpolation result of such pixels can be obtained by the linear method (1). In this case, as a further variation, if the distance to the best-matching pattern is above some threshold, the result of pattern matching is discarded and the result of the initial linear interpolation is accepted. This modification of the algorithm is shown in Fig. 15. It is straightforward to implement similar accepting conditions between other iterations.

<u>Regions with Arbitrary Shape</u>

The above-described first embodiment aimed at interpolation of a single column of pixels. The extension to multiple columns $[x_1, x_2]$ (a region with width equal to $x_2$-$x_1$+1) can be obtained from above description by iterating all pixel positions from the range: $x_0 \in [x_1, x_2]$.

In the case of a region of arbitrary shape, the method can also be applied, but with necessary adjustments due to curvilinear border and variable width of the interpolating region. Fig. 16-17 demonstrate that the main idea of the method does not change. The main changes are required, are:

•    The shape of the pixel and weight accumulators should resemble the shape of the interpolating region;

•    Adaptive size of the template pattern. If too many pixels for which values are to be calculated (interpolating pixels) are present in the template, its sizes should grow in order to increase the number of reliable pixels.

•    In the fast implementation modification described above, the integral distance $f$ is no longer a one-dimensional function. Instead, it is a two-dimensional function, which can be implemented using well-known technique of integral images.

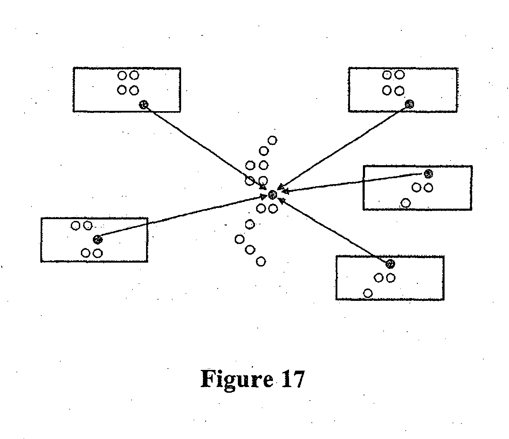

Referring to Fig. 16, best-matching patterns of five pixels of the interpolating region are shown by filled circles. The rectangles around each pixel (thin rectangles) show the patterns that are matched to all other patterns from the search area. Thick rectangles show the location of best-matching patterns. In best-matching patterns, the central pixel (filled circle) corresponds to the centre of the template pattern. Other pixels (empty circles) are the versions (candidates) of other pixels of the interpolating region. Again, multiple candidates can be averaged to obtain the result of interpolation (see Fig. 17).

Referring to Fig. 17, interpolation of a pixel from a curvilinear region is shown. The interpolated pixel (filled circle) is obtained by averaging the corresponding pixels from best-matching patterns. Each best-matching pattern (shown by rectangle), contains its own version (candidate) of the interpolated pixel. The resulting value is obtained by averaging of all candidate pixels.

<u>Pixel Combining Method</u>

In the above-described first embodiment, the candidate pixels are combined to give a resultant value by weighted averaging, where weight is a geometric function. However, any other method of combining to give a resultant value can be used, e.g.

•    Simple averaging

•    Trimmed averaging

•    Weighted averaging with distance value based weights

•    Median (or any other statistics) of all candidate pixels

<u>Alternative Applications</u>

In the above-described first embodiment, and the modifications and variations thereof, the image region interpolation processing is performed on image data obtained from a scanner. However, the same processing can be used for general-purpose image/video processing, restoration and editing, especially when removal of thin elongated regions is required, e.g

• Scratch removal from old photos/films

• Wire removal during movie postproduction

• Video deinterlacing by interpolating odd/even pixel rows of a video frame

<u>Other Modifications and Variations</u>

Many other modifications and variations are possible.

For example, in the first embodiment, the processing component 2 comprises part of a scanner. However, instead, the processing component 2 may be part of the processing apparatus that is separate from the scanner, such as a personal computer which receives scanned image data from the scanner.

In the above-described first embodiment, and the modifications and variations thereof, the RGB colour scheme is employed. However, other colour schemes, such as CMYK, could be used instead.

In the above-described first embodiment and the modifications and variations, each template pattern and each search area is centred on the corresponding pixel to be interpolated. However, this need not be the case, and each template pattern and/or search area can be offset so that the pixel to be interpolated is not at its centre (although it is preferable that the pixel to be interpolated should be close to the centre).

In the above-described first embodiment and the modifications and variations, each search area comprises a region of the image. However, each search area may comprise the whole image.

In the above-described first embodiment and the modifications and variations, processing is performed by a programmable processing apparatus using processing routines defined by computer program instructions. However, some, or all, of the processings could be performed using hardware instead.

**Claims**

1. A method of processing image data defining an image to calculate pixel values for a plurality of pixels within the image, the method comprising:

 defining a plurality of overlapping template patterns of pixels such that each template pattern comprises a region of the image and each pixel for which a value is to be calculated is present in at least two of the template patterns; for each template pattern:

 - defining a search area comprising the whole of the image or a region of the image that is larger than the template pattern;
 - comparing the values of the pixels in the template pattern with the values of the pixels in each of a plurality of candidate patterns, each candidate pattern comprising a region from the search area for the template pattern;
 - selecting from the plurality of candidate patterns the candidate pattern which represents a best match with the template pattern; and
 - determining for each pixel within the template pattern for which a value is to be calculated a respective pixel value from the selected candidate pattern;

 thereby generating for each pixel in the image for which a value is to be calculated, a plurality of values such that each value is derived from a different candidate pattern; and
 for each pixel for which a value is to be calculated, combining the derived pixel values therefor to generate a resultant value.

2. A method according to Claim 1, wherein the search area for each template pattern is defined so as to exclude the pixels in the image for which values are to be calculated.

3. A method according to Claim 1 or Claim 2, further comprising calculating an initial value for each pixel for which a value is to be calculated prior to comparing the values of the pixels in the template patterns with the values of the pixels in the candidate patterns, and wherein each initial value for a pixel is calculated in dependence upon the values of neighbouring pixels.

4. A method according to any preceding claim, wherein the process of combining the derived pixel values to generate a resultant value for a pixel comprises calculating a weighted average of the derived pixel values and the weighted average is calculated by:

> accumulating weighted versions of the derived pixel values in a first memory buffer;
> accumulating weighting values used to weight the derived pixel values in a second memory buffer; and
> dividing the accumulated value from the first memory buffer by the accumulated value from the second memory buffer.

5. A method according to any preceding claim, wherein each template pattern is defined with a size dependent upon the number of pixels contained therein for which a value is to be calculated, such that the size of the template pattern increases as the number of pixels for which a value is to be calculated increases.

6. A method according to any preceding claim, wherein each template pattern and each search area is defined for a respective one of the plurality of pixels for which a value is to be calculated, and each template pattern and each search area is centred on the corresponding pixel for which a value is to be calculated.

7. Image processing apparatus operable to process image data defining an image to calculate pixel values for a plurality of pixels within the image, the apparatus comprising:

> a template pattern selector (70) operable to define a plurality of overlapping template patterns of pixels such that each template pattern comprises a region of the image and each pixel for which a value is to be calculated is present in at least two of the template patterns;
> a search area selector (80) operable to define for each template pattern a search area comprising the whole of the image or a region of the image that is larger than the template pattern;
> a best-matching pattern selector (90) operable to perform processing for each template pattern to:

>> - compare the values of the pixels in the template pattern with the values of the pixels in each of a plurality of candidate patterns, each candidate pattern comprising a region from the search area for the template pattern;
>> - select from the plurality of candidate patterns the candidate pattern which represents a best match with the template pattern; and
>> - determine for each pixel within the template pattern for which a value is to be calculated a respective pixel value from the selected candidate pattern;

> thereby generating for each pixel in the image for which a value is to be calculated, a plurality of values such that each value is derived from a different candidate pattern; and
> a pixel value calculator (100, 110, 120) operable to combine, for each pixel for which a value is to be calculated, the derived pixel values therefor to generate a resultant value.

8. Apparatus according to Claim 7, wherein the search area selector (80) is arranged to define the search area for each template pattern so as to exclude the pixels in the image for which values are to be calculated.

9. Apparatus according to Claim 7 or Claim 8, further comprising an initial fill calculator (60) operable to calculate an initial value for each pixel for which a value is to be calculated prior to the best-matching pattern selector (90) comparing the values of the pixels in the template patterns with the values of the pixels in the candidate patterns, and wherein the initial fill calculator (60) is arranged to calculate each initial value for a pixel in dependence upon the values of neighbouring pixels.

10. Apparatus according to any of Claims 7 to 9, wherein the pixel value calculator (120) is arranged to combine the derived pixel values to generate a resultant value for a pixel by performing processing to calculate a weighted average of the derived pixel values, the processing comprising:

accumulating weighted versions of the derived pixel values in a first memory buffer (100);
accumulating weighting values used to weight the derived pixel values in a second memory buffer (110); and
dividing the accumulated value from the first memory buffer (100) by the accumulated value from the second memory buffer (110).

11. Apparatus according to any of Claims 7 to 10, wherein the template pattern selector (70) is arranged to define each template pattern with a size dependent upon the number of pixels contained therein for which a value is to be calculated, such that the size of the template pattern increases as the number of pixels for which a value is to be calculated increases.

12. Apparatus according to any of Claims 7 to 11, wherein the template pattern selector (70) and the search area selector (80) are arranged to define each template pattern and each search area for a respective one of the plurality of pixels for which a value is to be calculated, and such that each template pattern and each search area is centred on the corresponding pixel for which a value is to be calculated.

13. A computer program product comprising computer program instructions to program a programmable processing apparatus to become operable to perform a method as set out in at least one of Claims 1 to 6.

**Patentansprüche**

1. Verfahren zum Verarbeiten von Bilddaten, welche ein Bild definieren, um Pixelwerte für eine Vielzahl von Pixeln innerhalb des Bildes zu berechnen, wobei das Verfahren umfasst:

Definieren einer Vielzahl von überlappenden Vorlagemustern von Pixeln, so dass jedes Vorlagemuster einen Bereich des Bildes umfasst und jedes Pixel, für welches ein Wert zu berechnen ist, in mindestens zwei der Vorlagemuster vorhanden ist;
für jedes Vorlagemuster:

- Definieren eines Suchbereichs, welches das ganze Bild oder einen Bereich des Bildes, welcher größer ist als das Vorlagemuster, umfasst;
- Vergleichen der Werte der Pixel in dem Vorlagemuster mit den Werten der Pixel in jedem einer Vielzahl von Kandidatenmustern, wobei jedes Kandidatenmuster einen Bereich von dem Suchbereich für das Vorlagemuster umfasst;
- Auswählen, aus der Vielzahl von Kandidatenmustern, des Kandidatenmusters, welches eine beste Übereinstimmung mit dem Vorlagemuster darstellt; und
- Bestimmen, für jedes Pixel innerhalb des Vorlagemusters, für welches ein Wert zu berechnen ist, eines jeweiligen Pixelwerts aus dem ausgewählten Kandidatenmuster;

wodurch für jedes Pixel in dem Bild, für welches ein Wert zu berechnen ist, eine Vielzahl von Werten erzeugt wird, so dass jeder Wert aus einem anderen Kandidatenmuster abgeleitet ist; und

für jedes Pixel für welches ein Wert zu berechnen ist, kombinieren der hierfür abgeleiteten Pixelwerte, um einen Ergebniswert zu erzeugen.

2. Verfahren nach Anspruch 1, wobei der Suchbereich für jedes Vorlagemuster so definiert ist, um die Pixel in dem Bild, für welche Werte zu berechnen sind, auszuschließen.

3. Verfahren nach Anspruch 1 oder Anspruch 2, ferner umfassend Berechnen eines Initialwerts für jedes Pixel, für welches ein Wert zu berechnen ist, vor einem Vergleich der Werte der Pixel in den Vorlagemustern mit den Werten der Pixel in den Kandidatenmustern, und wobei jeder Initialwert für ein Pixel in Abhängigkeit der Werte benachbarter Pixel berechnet wird.

4. Verfahren nach einem der vorangegangenen Ansprüche, wobei der Prozess des Kombinierens der abgeleiteten Pixelwerte, um einen Ergebniswert für einen Pixel zu erzeugen, umfasst berechnen eines gewichteten Mittelwerts der abgeleiteten Pixelwerte und der gewichtete Mittelwert berechnet wird durch:

Akkumulieren gewichteter Versionen der abgeleiteten Pixelwerte in einem ersten Speicherpuffer;

Akkumulieren von Gewichtungswerten, die verwendet werden zum Gewichten der abgeleiteten Pixelwerte, in einem zweiten Speicherpuffer; und

Teilen des akkumulierten Werts aus dem ersten Speicherpuffer durch den akkumulierten Wert aus dem zweiten Speicherpuffer.

5. Verfahren nach einem der vorangegangenen Ansprüche, wobei jedes Vorlagemuster definiert ist mit einer Größe, abhängig von der Zahl der Pixel, die darin enthalten sind, für welche ein Wert zu berechnen ist, so dass sich die Größe des Vorlagemuster erhöht, wenn sich die Zahl von Pixeln, für welche ein Wert zu berechnen ist, erhöht.

6. Verfahren nach einem der vorangegangenen Ansprüche, wobei jedes Vorlagemuster und jeder Suchbereich für einen jeweiligen der Vielzahl von Pixeln definiert ist, für welchen ein Wert zu berechnen ist, und jedes Vorlagemuster und jeder Suchbereich zentriert ist auf das jeweilige Pixel, für welches ein Wert zu berechnen ist.

7. Bildverarbeitungsvorrichtung, welche betreibbar ist zum Verarbeiten von Bilddaten, welche ein Bild definieren, um Pixelwerte für eine Vielzahl von Pixeln innerhalb des Bildes zu berechnen, umfassend:

einen Vorlagemuster-Auswähler (70), welcher betreibbar ist zum Definieren einer Vielzahl von überlappenden Vorlagemustern von Pixeln, so dass jedes Vorlagemuster einen Bereich des Bildes umfasst und jedes Pixel, für welches ein Wert zu berechnen ist, in mindestens zwei der Vorlagemuster vorhanden ist;

einen Suchbereich-Auswähler (80), welcher betreibbar ist zum Definieren, für jedes Vorlagemuster, eines Suchbereichs, welches das ganze Bild oder einen Bereich des Bildes, welcher größer ist als das Vorlagemuster, umfasst;

einen Am-Besten-Passendes-Muster-Auswähler (90), welcher betreibbar ist zum Durchführen eine Verarbeitung für jedes Vorlagemuster zum:

- Vergleichen der Werte der Pixel in dem Vorlagemuster mit den Werten der Pixel in jedem einer Vielzahl von Kandidatenmustern, wobei jedes Kandidatenmuster einen Bereich von dem Suchbereich für das Vorlagemuster umfasst;
- Auswählen, aus der Vielzahl von Kandidatenmustern, des Kandidatenmusters, welches eine beste Übereinstimmung mit dem Vorlagemuster darstellt; und
- Bestimmen für jedes Pixel innerhalb des Vorlagemusters, für welches ein Wert zu berechnen ist, einen jeweiligen Pixelwert aus dem ausgewählten Kandidatenmuster;

wodurch für jedes Pixel in dem Bild, für welches ein Wert zu berechnen ist, eine Vielzahl von Werten erzeugt wird, so dass jeder Wert aus einem anderen Kandidatenmuster abgeleitet ist; und

einen Pixelwert-Berechner (100, 110, 120), welcher betreibbar ist zum Kombinieren, für jedes Pixel für welches ein Wert zu berechnen ist, der hierfür abgeleiteten Pixelwerte, um einen Ergebniswert zu erzeugen.

8. Vorrichtung nach Anspruch 7, wobei der Suchbereich-Auswähler (80) eingerichtet ist zum Definieren des Suchbereichs für jedes Vorlagemuster, um die Pixel in dem Bild, für welche Werte zu berechnen sind, auszuschließen.

9. Vorrichtung nach Anspruch 7 oder Anspruch 8, ferner umfassend einen Initial-Füll-Berechner (60), welcher betreibbar ist zum Berechnen eines Initialwert für jeden Pixel, für welchen ein Wert zu berechnen ist, bevor der Am-Besten-Passendes-Muster-Auswähler (90) die Werte der Pixel in den Vorlagemustern mit den Werten der Pixel in den Kandidatenmustern vergleicht, und wobei der Initial-Füll-Berechner (60) eingerichtet ist zum Berechnen jedes Initialwerts für einen Pixel in Abhängigkeit der Werte benachbarten Pixel.

10. Vorrichtung nach einem der Ansprüche 7 bis 9, wobei der Pixelwert-Berechner (120) eingerichtet ist zum Kombinieren der abgeleiteten Pixelwerte, um einen Ergebniswert für einen Pixel zu erzeugen, durch Durchführen einer Verarbeitung zum Berechnen eines gewichteten Mittelwerts der abgeleiteten Pixelwerte, wobei die Verarbeitung umfasst:

Akkumulieren gewichteter Versionen der abgeleiteten Pixelwerte in einem ersten Speicherpuffer (100); Akkumulieren von Gewichtungswerten, die verwendet werden zum Gewichten der abgeleiteten Pixelwerte, in einem zweiten Speicherpuffer (110); und

Teilen des akkumulierten Werts aus dem ersten Speicherpuffer (100) durch den akkumulierten Wert aus dem zweiten Speicherpuffer (110).

**11.** Vorrichtung nach einem der Ansprüche 7 bis 10, wobei der Vorlagemuster-Auswähler (70) eingerichtet ist zum Definieren jedes Vorlagemusters mit einer Größe, abhängig von der Zahl von Pixeln, die darin enthalten sind, für welche ein Wert zu berechnen ist, so dass sich die Größe des Vorlagemuster erhöht, wenn sich die Zahl von Pixeln, für welche ein Wert zu berechnen ist, erhöht.

**12.** Vorrichtung nach einem der Ansprüche 7 bis 11, wobei der Vorlagemuster-Auswähler (70) und der Suchbereich-Auswähler (80) eingerichtet sind zum Definieren jedes Vorlagemusters und jedes Suchbereichs für einen jeweiligen der Vielzahl von Pixeln, für welchen ein Wert zu berechnen ist, und so, dass jedes Vorlagemuster und jeder Suchbereich zentriert ist auf das jeweilige Pixel, für welches ein Wert zu berechnen ist.

**13.** Computerprogrammprodukt mit Computerprogrammbefehlen zum Programmieren einer programmierbaren Verarbeitungsvorrichtung, um betreibbar zu werden zum Durchführen eines Verfahrens nach einem der Ansprüche 1 bis 6.

**Revendications**

**1.** Procédé de traitement de données d'image définissant une image pour calculer des valeurs de pixel pour une pluralité de pixels à l'intérieur de l'image, le procédé comprenant les étapes consistant à:

définir une pluralité de motifs de modèle se chevauchant de pixels de sorte que chaque motif de modèle comprend une région de l'image et chaque pixel pour lequel une valeur doit être calculée est présent dans au moins deux des motifs de modèle ;
pour chaque motif de modèle :

- définir une zone de recherche comprenant la totalité de l'image ou une région de l'image qui est plus grande que le motif de modèle ;
- comparer les valeurs des pixels dans le motif de modèle aux valeurs des pixels dans chacun d'une pluralité de motifs candidats, chaque motif candidat comprenant une région provenant de la zone de recherche pour le motif de modèle ;
- sélectionner à partir de la pluralité de motifs candidats le motif candidat qui représente une meilleure concordance avec le motif de modèle ; et
- déterminer pour chaque pixel à l'intérieur du motif de modèle pour lequel une valeur doit être calculée une valeur de pixel respective à partir du motif candidat sélectionné ;

générant de ce fait pour chaque pixel dans l'image pour lequel une valeur doit être calculée, une pluralité de valeurs de sorte que chaque valeur est déterminée à partir d'un motif candidat différent ; et
pour chaque pixel pour lequel une valeur doit être calculée, combiner les valeurs de pixel dérivées pour celui-ci pour générer une valeur résultante.

**2.** Procédé selon la revendication 1, dans lequel la zone de recherche pour chaque motif de modèle est définie afin d'exclure les pixels dans l'image pour lesquels des valeurs doivent être calculées.

**3.** Procédé selon la revendication 1 ou la revendication 2, comprenant en outre le calcul d'une valeur initiale pour chaque pixel pour lequel une valeur doit être calculée avant de comparer les valeurs des pixels dans les motifs de modèle aux valeurs des pixels dans les motifs candidats, et dans lequel chaque valeur initiale pour un pixel est calculée en fonction des valeurs de pixels voisins.

**4.** Procédé selon l'une quelconque revendication précédente, dans lequel le processus de combiner les valeurs de pixel dérivées pour générer une valeur résultante pour un pixel comprend le calcul d'une moyenne pondérée des valeurs de pixel dérivées et la moyenne pondérée est calculée en :

accumulant des versions pondérées des valeurs de pixel dérivées dans un premier tampon de mémoire ;
accumulant des valeurs de pondération utilisées pour pondérer les valeurs de pixel dérivées dans un second tampon de mémoire ; et
divisant la valeur accumulée provenant du premier tampon de mémoire par la valeur accumulée provenant du second tampon de mémoire.

**5.** Procédé selon l'une quelconque revendication précédente, dans lequel chaque motif de modèle est défini avec une taille dépendant du nombre de pixels contenus en son sein pour lesquels une valeur doit être calculée, de sorte que la taille du motif de modèle augmente à mesure que le nombre de pixels pour lesquels une valeur doit être calculée augmente.

6. Procédé selon l'une quelconque revendication précédente, dans lequel chaque motif de modèle et chaque zone de recherche est défini(e) pour un pixel respectif de la pluralité de pixels pour lesquels une valeur doit être calculée, et chaque motif de modèle et chaque zone de recherche est centré(e) sur le pixel correspondant pour lequel une valeur doit être calculée.

7. Appareil de traitement d'image pouvant être mis en oeuvre pour traiter des données d'image définissant une image pour calculer des valeurs de pixel pour une pluralité de pixels à l'intérieur de l'image, l'appareil comprenant :

un sélecteur de motif de modèle (70) pouvant être mis en oeuvre pour définir une pluralité de motifs de modèle se chevauchant de pixels de sorte que chaque motif de modèle comprend une région de l'image et chaque pixel pour lequel une valeur doit être calculée est présent dans au moins deux des motifs de modèle ;
un sélecteur de zone de recherche (80) pouvant être mis en oeuvre pour définir pour chaque motif de modèle une zone de recherche comprenant la totalité de l'image ou une région de l'image qui est plus grande que le motif de modèle ;
un sélecteur de motif à meilleure correspondance (90) pouvant être mis en oeuvre pour effectuer du traitement pour chaque motif de modèle pour :

- comparer les valeurs des pixels dans le motif de modèle aux valeurs des pixels dans chacun d'une pluralité de motifs candidats, chaque motif candidat comprenant une région provenant de la zone de recherche pour le motif de modèle ;
- sélectionner à partir de la pluralité de motifs candidats le motif candidat qui représente une meilleure concordance avec le motif de modèle ; et
- déterminer pour chaque pixel à l'intérieur du motif de modèle pour lequel une valeur doit être calculée une valeur de pixel respective à partir du motif candidat sélectionné ;

générant de ce fait pour chaque pixel dans l'image pour lequel une valeur doit être calculée, une pluralité de valeurs de sorte que chaque valeur est dérivée à partir d'un motif candidat différent ; et
un calculateur de valeur de pixel (100, 110, 120) pouvant être mis en oeuvre pour combiner, pour chaque pixel pour lequel une valeur doit être calculée, les valeurs de pixel dérivées pour celui-ci pour générer une valeur résultante.

8. Appareil selon la revendication 7, dans lequel le sélecteur de zone de recherche (80) est agencé pour définir la zone de recherche pour chaque motif de modèle afin d'exclure les pixels dans l'image pour lesquels des valeurs doivent être calculées.

9. Appareil selon la revendication 7 ou la revendication 8, comprenant en outre un calculateur de remplissage initial (60) pouvant être mis en oeuvre pour calculer une valeur initiale pour chaque pixel pour lequel une valeur doit être calculée avant que le sélecteur de motif à meilleure correspondance (90) compare les valeurs des pixels dans les motifs de modèle aux valeurs des pixels dans les motifs candidats, et dans lequel le calculateur de remplissage initial (60) est agencé pour calculer chaque valeur initiale pour un pixel en fonction des valeurs de pixels voisins.

10. Appareil selon l'une quelconque des revendications 7 à 9, dans lequel le calculateur de valeur de pixel (120) est agencé pour combiner les valeurs de pixel dérivées pour générer une valeur résultante pour un pixel en effectuant un traitement pour calculer une moyenne pondérée des valeurs de pixel dérivées, le traitement comprenant :

l'accumulation de versions pondérées des valeurs de pixel dérivées dans un premier tampon de mémoire (100) ;
l'accumulation de valeurs de pondération utilisées pour pondérer les valeurs de pixel dérivées dans un second tampon de mémoire (110) ; et
la division de la valeur accumulée provenant du premier tampon de mémoire (100) par la valeur accumulée provenant du second tampon de mémoire (110).

11. Appareil selon l'une quelconque des revendications 7 à 10, dans lequel le sélecteur de motif de modèle (70) est agencé pour définir chaque motif de modèle avec une taille dépendant du nombre de pixels contenus en son sein pour lesquels une valeur doit être calculée, de sorte que la taille du motif de modèle augmente à mesure que le nombre de pixels pour lesquels une valeur doit être calculée augmente.

12. Appareil selon l'une quelconque des revendications 7 à 11, dans lequel le sélecteur de motif de modèle (70) et le sélecteur de zone de recherche (80) sont agencés pour définir chaque motif de modèle et chaque zone de recherche pour un pixel respectif de la pluralité de pixels pour lesquels une valeur doit être calculée, et de sorte que chaque motif de modèle et chaque zone de recherche est centré(e) sur le pixel correspondant pour lequel une valeur doit être calculée.

13. Produit formant programme informatique comprenant des instructions de programme informatique pour programmer un appareil de traitement programmable pour devenir opérationnel pour effectuer un procédé tel qu'exposé dans au moins une des revendications 1 à 6.

(1)   (2)  ....                        (N)     | Scanning
                                               | direction

**Figure 1**

Detector K              Detector K+1    | Scanning
                                        | direction

| B | B | B |    | B | B | B |
| G | G | G |    | G | G | G |
| R | R | R |    | R | R | R |

Missing pixel between two sensor chips

**Figure 2**

(1)  (2) ...                (N)

## Figure 3

Missing pixel

Interpolated pixel (linear interpolation)

## Figure 4

**Figure 5**

**Figure 6**

Interpolated pixel (proposed method)

**Figure 7**

像とは，広範囲の応用などか室内の監視を
の監視や独居る特徴点のみ段階で構成さ
学の研究室内画像，射影変

**Figure 8**

Figure 9

Input data: image $I(x,y)$; position of the interpolated column $x_0$

10

Initially fill the interpolating pixels based on their neighbourhood

20

- Select next pixel $(x_0,y)$ for interpolation;
- Set pattern $N(x_0,y)$ centred at $(x_0,y)$ of size $(2N_x+1)\mathrm{x}(2N_y+1)$;
- Set search region $S(x_0,y)$ centred at $(x_0,y)$ of size $(2S_x+1)\mathrm{x}(2S_y+1)$

30

- For each shift $-S_x \leq s_x \leq S_x$, $-S_y \leq s_y \leq S_y$, compute Sum-of-abs-colour-differences similarity between patterns $N(x_0,y)$ and $N(x_0+s_x,y+s_y)$
- Select best-matching pattern $N(x_0+s_x^*,y+s_y^*)$

40

- Add weighted pixels from the best-matching pattern to the pixel accumulator
- Add weight values to the weight accumulator

50

Compute average pixel value (divide pixel accumulator entry by weight accumulator entry) and put it in the output image

Next pixel: $y \leftarrow y+1$

All pixels have been processed

Output image

## Figure 10

Input image

**Figure 11**

Pixel accumulator   Weight accumulator

Position of the interpolating pixels in the best-matching pattern

Weight function

Position of the pixel with respect to interpolated pixel

Pattern $N(x_0,y)$

Best-matching pattern $N(x_0+s_x^*,y+s_y^*)$

$$\sum w_i \begin{bmatrix} R_i \\ G_i \\ B_i \end{bmatrix} \qquad \sum w_i$$

**Figure 12**

Interpolated pixel: $\dfrac{\sum w_i \begin{bmatrix} R_i \\ G_i \\ B_i \end{bmatrix}}{\sum w_i}$

Output image

Output line

Search area half-size

Pattern half-size

New input line

Delay $S_y + N_y + I$

## Figure 13

| Input image | Iteration 0: Initially fill the interpolated pixels based on their neighbourhood | *Output of Iteration 0* | Iteration *i*: Pattern matching and pixel averaging | *Output image* |

*Input of iteration i+1 = Output of iteration i*

## Figure 14

Location of
interpolated
pixel [x,y]

Iteration 0: linear
interpolation

$C_0[x,y]$

Iteration 1: best-matching pattern search:
Distance = min $SACD[x,y,s_x,s_y]$

$[s_x^*,s_y^*]$ = arg min $SACD[x,y,s_x,s_y]$

No — Distance <
Threshold — Yes

Output = $C_0[x,y]$

Output = $C[x+s_x^*, y+s_y^*]$

**Figure 15**

**Figure 16**

**Figure 17**